# EUROPEAN PATENT SPECIFICATION

(11) **EP 4 521 237 B1**
(45) Date of publication and mention of the grant of the patent: **28.10.2026**
(21) Application number: 23823190.6
(22) Date of filing: 14.06.2023
(51) Int. Cl.: G06F 9/451, G06F 16/27, H04L 67/12, G06F 3/0482

(54) **METHOD FOR CONTROLLING CROSS-DEVICE APPLICATION, AND ELECTRONIC DEVICE**
VERFAHREN ZUR STEUERUNG EINER VORRICHTUNGSÜBERGREIFENDEN ANWENDUNG UND ELEKTRONISCHE VORRICHTUNG
PROCÉDÉ DE COMMANDE D'APPLICATION INTER-DISPOSITIFS, ET DISPOSITIF ÉLECTRONIQUE

(30) Priority: 16.06.2022 CN 202210682462
(43) Date of publication of application: 12.03.2025
(73) Proprietor: Huawei Technologies Co., Ltd., Shenzhen, Guangdong 518129 (CN)
(72) Inventor: XIA, Yonglin, Shenzhen, Guangdong 518129 (CN)
(74) Representative: Epping - Hermann - Fischer
(86) International application number: PCT/CN2023/100200
(87) International publication number: WO 2023/241624

(56) References cited:
- EP-A1- 3 038 328
- CN-A- 1 708 751
- CN-A- 111 240 547
- CN-A- 112 416 200
- CN-A- 114 071 425
- CN-A- 114 296 948
- CN-A- 114 296 948
- CN-A- 114 327 924
- US-A1- 2017 033 989

## Description

This disclosure claims priority to Chinese Patent Application No. 202210682462.0, filed with the China National Intellectual Property Administration on June 16, 2022 and entitled "CROSS-DEVICE APPLICATION CONTROL METHOD AND ELECTRONIC DEVICE".

### TECHNICAL FIELD

This disclosure relates to the field of electronic devices, and more specifically, to a cross-device application control method and an electronic device.

### BACKGROUND

With popularization of electronic devices, each user usually has a plurality of intelligent electronic devices at the same time, including a mobile phone, a tablet, a smart screen, a personal computer (personal computer, PC), a smart speaker, a smart cockpit, and the like. Applications installed on these devices are different, and usage and control of applications on different devices are also different. For example, an application on a large screen needs to support control of a remote control, and an application on a mobile phone cannot be directly used on the large screen.

Currently, users are not satisfied with operating and managing applications on only a single device. However, in a distributed multi-device interaction scenario, cross-device application use is limited by a series of problems such as different systems, application adaptation, and data synchronization. For example, a user watches a video or plays a game on a mobile phone, and wants to continue to use such an application on a large screen after going back home. However, an application on the large screen usually does not have a corresponding mobile phone application, for example, a live broadcast application or a game application, and an operation cannot be performed on the large screen. For another example, a user wants to continue to listen to music of a mobile phone when driving a vehicle. However, because a corresponding application is not installed in a cockpit, the user needs to switch to the mobile phone to perform an application operation. Frequent device switching for application operation causes poor user experience.

Therefore, there is an urgent need for a cross-device application control method. According to the method, an existing application does not need to be modified, and a list of applications from different devices is supported in being displayed on a current device, so that a user can perform cross-device application management, and seamlessly use, on the current device, an application installed on another device.

Document EP 3038 328 A1 relates to a method and apparatus which are provided for sharing data of an application. The method of an electronic device includes determining an application list of a partner electronic device, displaying the application list of the partner electronic device, receiving a selection of an application for sharing data from the application list, and transmitting, to the partner electronic device, application selection information and shared data information, based on the selected application. The step of determining the application list can comprise the following: transmitting, to the partner electronic device, a request signal requesting the application list from the partner electronic device through a communication connection with the partner electronic device; and receiving the application list from the partner electronic device in response to the request signal. The method can further comprise following steps: receiving screen sharing data from the partner electronic device, displaying an execution screen of the selected application, based on the screen sharing data; detecting shared data of the selected application, based on the execution screen of the application; and transmitting the shared data of the selected application to the partner electronic device.

Documents CN 114 296 948 A, CN 114 327 924 A and CN 112 416 200 A describe cross-device applications which relate to the field of electronic device technologies for reducing operation complexity and for improving work efficiency of a user.

### SUMMARY

This disclosure provides a cross-device application control method and an electronic device. According to the method, an existing application does not need to be modified, and a list of applications from different devices is supported in being displayed on a current device, so that a user can perform cross-device application management, and seamlessly use, on the current device, an application installed on another device.

The present invention is set out by the set of appended claims. Thus, the embodiments of the invention are provided by the appended claims.

### BRIEF DESCRIPTION OF DRAWINGS

FIG. 1 is a schematic of two current methods for projection between devices;
FIG. 2 is a schematic of a current method for application relay between devices;
FIG. 3 shows a system architecture to which a cross-device application control method is applicable according to an embodiment of this disclosure;
FIG. 4 shows three specific implementations according to this disclosure;
FIG. 5 is a schematic of a hardware structure of an electronic device according to an embodiment of this disclosure;
FIG. 6 is a schematic flowchart of a cross-device application control method according to an embodiment of this disclosure;
FIG. 7 is a schematic flowchart of a specific example of a cross-device application control method according to an embodiment of this disclosure;
FIG. 8 is a diagram of an architecture to which a specific example a cross-device application control method is applicable according to an embodiment of this disclosure;
FIG. 9 is a diagram of a user interface of a specific example of a cross-device application control method according to an embodiment of this disclosure;
FIG. 10 is a diagram of another user interface of a specific example of a cross-device application control method according to an embodiment of this disclosure;
FIG. 11 is a schematic flowchart of another specific example of a cross-device application control method according to an embodiment of this disclosure;
FIG. 12 is an interaction diagram of an example of a cross-device application control method according to an embodiment of this disclosure;
FIG. 13 is a schematic flowchart of still another specific example of a cross-device application control method according to an embodiment of this disclosure;
FIG. 14 is a diagram of a user interface of a specific example of a cross-device application control method according to an embodiment of this disclosure; and
FIG. 15 is a diagram of another user interface of a specific example of a cross-device application control method according to an embodiment of this disclosure.

### DESCRIPTION OF EMBODIMENTS

The following describes technical solutions of this disclosure with reference to accompanying drawings.

Terms used in the following embodiments are merely intended to describe particular embodiments, but are not intended to limit this disclosure. As used in the specification and the appended claims of this disclosure, the singular expressions "a/an", "one", "said", "the foregoing", "the" and "this" are intended to include such expressions as "one or more", unless otherwise clearly indicated in the context. It should be further understood that in the following embodiments of this disclosure, "at least one" and "one or more" refer to one, two, or more. The term "and/or" is used for describing an association relationship between associated objects, and indicates that three relationships may exist. For example, A and/or B may represent: Only A exists, both A and B exist, and only B exists, where A and B may be singular or plural. A character "/" generally indicates an "or" relationship between associated objects before and after the character.

Reference like "one embodiment" or "some embodiments" described in this specification means that a particular characteristic, structure, or feature described with reference to one or more embodiments is included in the one or more embodiments of this disclosure. Therefore, statements "in one embodiment", "in some embodiments", "in some other embodiments", "in other embodiments", and the like appear in different places in this specification do not necessarily refer to the same embodiment, but mean "one or more but not all embodiments", unless otherwise specified in other ways. Terms "include", "comprise", "have", and variations thereof all mean "including but not limited to", unless otherwise specified.

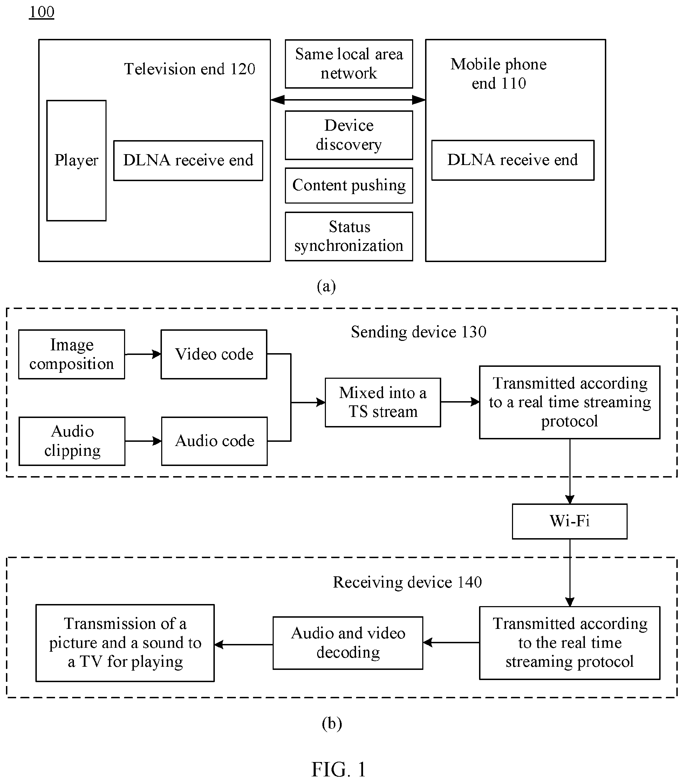

FIG. 1 is a schematic of two current methods for projection between devices.

Currently, mainstream methods for projection between devices mainly include a file-based projection method and a screen mirroring-based projection method. The file-based projection method is only applicable to pushing a file like a video, audio, or a picture to another device for display. For example, in a digital living network alliance (digital living network alliance, DLNA) protocol projection method shown in FIG. 1(a), a mobile phone end 110 and a television (television, TV) end 120 are in a same local area network, and perform device discovery, content pushing, status synchronization, and the like by using a DLNA receive end. However, the file-based projection method relatively relies on a projection capability of an application about providing related content. In addition, projection of another page of the application is not supported, and displayed content is limited. Therefore, a requirement of a user for using an application in a diversified manner cannot be met.

In the screen mirroring-based projection method, content displayed by a sending device can be sent to a receiving device for display in a mirroring manner, and the content displayed by the sending device is completely the same as that displayed by the receiving device. For example, in a mirroring projection Miracast protocol projection method shown in FIG. 1(b), a sending device 130 compresses a composite image into video code that complies with a digital video compression format standard H.264, compresses clipped audio into audio code that complies with an advanced audio coding (advanced audio coding, AAC) standard, mixes the image code and the audio code into a data transport stream (transport stream, TS), and transmits the data transport stream to a receiving device 140 according to a real time streaming protocol (real time streaming protocol, RTSP). The receiving device 140 receives the TS stream according to the RTSP protocol, performs audio and video decoding on the TS stream, and transmits a picture and a sound to a TV for playing. However, according to the screen mirroring-based projection method, a size of a display of the receiving device 140 and an operation cannot be adapted, and a user operation needs to be further controlled on the sending device 130. Therefore, interaction is complex.

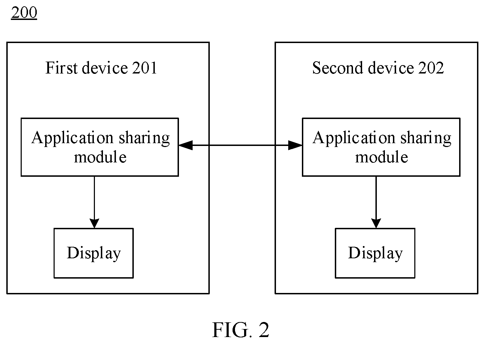

FIG. 2 is a schematic of a current method for application relay between devices.

As shown in FIG. 2, an application sharing module is disposed on both a first device 201 and a second device 202. The first device 201 and the second device 202 may perform application relay by using the application sharing modules, to implement a cross-device task processing function. The function allows a user to start a task on one device, and then continue to process the task on another nearby device. For example, the user may open a browser on the first device 201 to browse a web page, and a temporary browser tag appears on a left side of a taskbar on the second device 202 near the first device 201. If the user clicks the browser tag on the second device 202, the web page that is just browsed on the first device 201 may be opened. In this way, the browsing continues. However, in the foregoing method, a same application (for example, a same browser) needs to be installed on both the first device 201 and the second device 202. In this method, data content of the application is synchronized, and the application of the first device 201 cannot be migrated to the second device 202 for running. In addition, the user cannot actively select, on the second device 202, an application of the first device 201 to open for running, and needs to first operate the first device 201 for sharing, and then operate the second device 202 for receiving. Therefore, cross-device interaction is complex.

Based on the foregoing reasons, this disclosure proposes a cross-device application control method and an electronic device. According to the method, an existing application does not need to be modified, and a list of applications from different devices is supported in being displayed on a current device, so that a user can perform cross-device application management, and seamlessly use, on the current device, an application installed on another device.

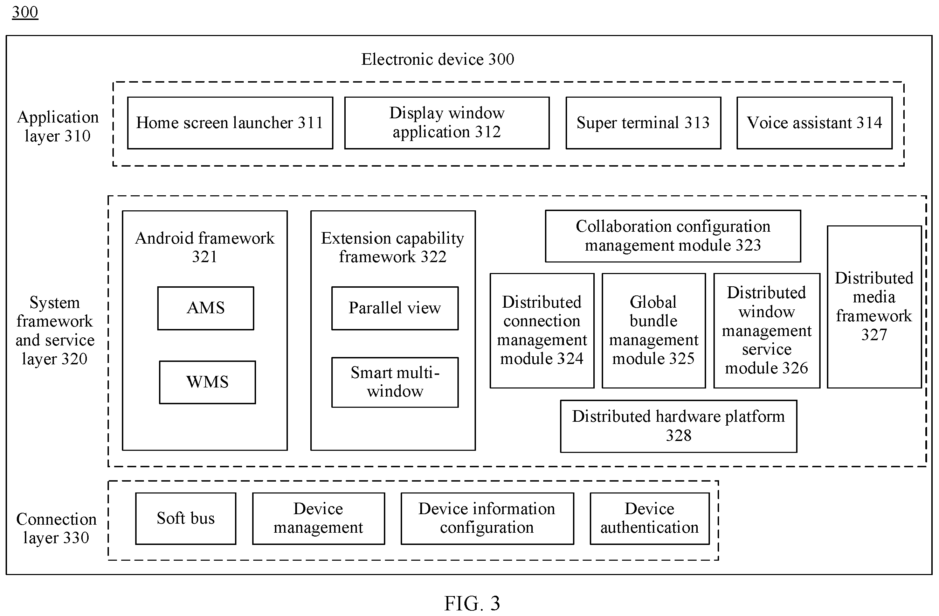

FIG. 3 shows a system architecture to which a cross-device application control method is applicable according to an embodiment of this disclosure.

As shown in FIG. 3. A cross-device application control method provided in an embodiment of this disclosure may be applied to an electronic device 300, and the electronic device 300 may be a sending device or a receiving device. The electronic device 300 includes an application layer 310, a system framework and service layer 320, and a connection layer 330. The application layer 310 includes a home screen launcher 311 (Launcher), a display window application 312 (HiWindow), a super terminal 313, and a voice assistant 314. The home screen launcher 311 is configured to display a super home screen widget and a user interface (user interface, UI). The display window application 312 is configured to display an application on a sending device side. The super terminal 313 is configured to provide a capability of interaction between a user and the system framework and service layer 320 and the connection layer 330. The voice assistant 314 is configured to provide a voice cross-end collaborative response, a capability of collaboratively opening an application, and the like. The system framework and service layer 320 includes an Android framework 321, an extension capability framework 322, a collaboration configuration management module 323, a distributed connection management module 324 (All Connect), a global bundle management (bundle management service, BMS) module 325, a distributed window management service (distribute window management service, DWMS) module 326, a distributed media framework 327, and a distributed hardware platform 328. The Android framework 321 is configured to provide an application widget management service (activity management service, AMS) function and a window management service (window management service, WMS) function. The extension capability framework 322 is configured to provide a parallel view function and a smart multi-window function. The parallel view function supports an application in being opened in a parallel view manner. The smart multi-window function supports multi-window display of an application. The collaboration configuration management module 323 is configured to manage a policy of cross-device application migration and a policy of hardware migration. The distributed connection management module 324 is configured to manage a distributed service state and process a service conflict. The global bundle management module 325 is configured to synchronize application list data, including application names and icons, of all devices across devices. The distributed window management service module 326 is configured to provide an application projection interface capability, window display adaptation logic, architecture reconstruction, and the like. The distributed media framework 327 is configured to support multi-channel audio, audio distributed capability, cross-device camera capability construction, and the like. The distributed hardware platform 328 is for hardware virtualization and application projection capability. The connection layer 330 is configured to provide a software bus function, and provide functions of device discovery, device authentication, device information configuration, device management, and the like.

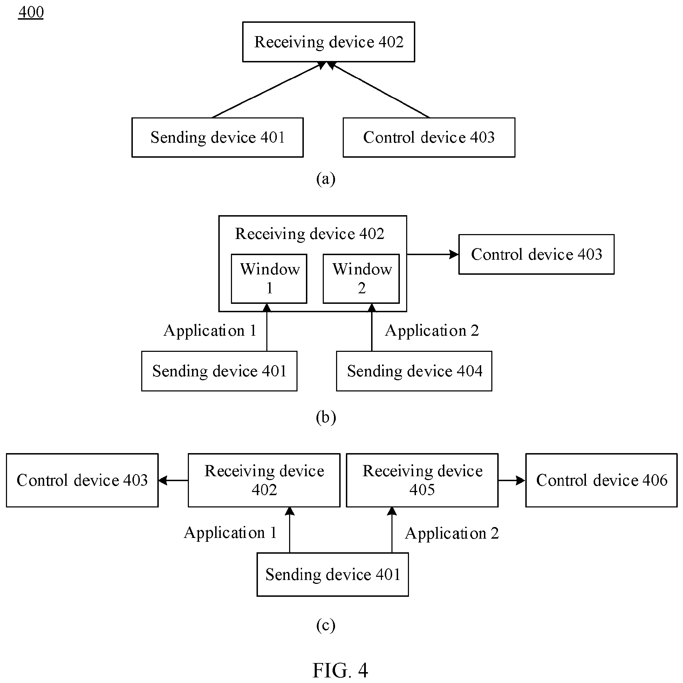

FIG. 4 shows three specific implementations according to this disclosure. With reference to FIG. 4, the three specific implementations provided in this disclosure are described. Benefiting from guidance and inspiration presented in the foregoing descriptions and related accompanying drawings, a person skilled in the art can make modifications and other embodiments of this disclosure. Therefore, it should be understood that this disclosure is not limited to the disclosed specific embodiments.

This disclosure supports a user in seamlessly accessing, on a receiving device, an application of a sending device. The sending device may be a mobile phone of the user, and the application runs on the mobile phone. The sending device may be connected to the receiving device in a wireless manner, and send information such as an application icon, an application name, and a bundle name to the receiving device. The receiving device may be a large display screen. When the application is displayed on the large display screen, an application interface supports adaptation to a screen of the receiving device, supports landscape display, portrait display, split-screen display, and another display manner, supports application management, supports blocklist and trustlist control, and the like. A control device may be a remote control panel or a mobile phone, and is responsible for application control, and supports a plurality of interaction manners such as button interaction, touch interaction, and sliding interaction.

In a possible implementation, according to this disclosure, that one sending device corresponds to one receiving device and that the receiving device corresponds to one control device may be supported. As shown in FIG. 4(a), a sending device 401 corresponds to a receiving device 402. A user may seamlessly access an application of the sending device 401 on the receiving device 402, and control, by using a control device 403 corresponding to the receiving device 402, the application displayed on the receiving device 402.

In another possible implementation, according to this disclosure, that a plurality of sending devices correspond to one receiving device and that the receiving device corresponds to one control device may alternatively be supported. As shown in FIG. 4(b), both a sending device 401 and a sending device 404 correspond to a receiving device 402. A user may simultaneously access, on the receiving device 402, an application 1 (for example, a video application) of the sending device 401 and an application 2 (for example, a navigation application) of the sending device 404. The application 1 of the sending device 401 is displayed on a window 1 of the receiving device 402, and the application 2 of the sending device 404 is displayed on a window 2 of the receiving device 402. The user may control, by using a control device 403 corresponding to the receiving device 402, the application 1 and/or the application 2 displayed on the receiving device 402.

In still another possible implementation, according to this disclosure, that one sending device corresponds to a plurality of receiving devices and that one receiving device corresponds to one control device may alternatively be supported. As shown in FIG. 4(c), a sending device 401 corresponds to both a receiving device 402 and a receiving device 405. A user may access, on the receiving device 402, an application 1 (for example, a video application) of the sending device 401, and control, by using a control device 403, the application 1 displayed on the receiving device 402. The user may access, on the receiving device 405, an application 2 (for example, a navigation application) of the sending device 401, and control, by using a control device 406, the application 2 displayed on the receiving device 405.

It should be understood that in the foregoing three implementations, an example in which one receiving device corresponds to one control device is used for description. However, this disclosure is not limited thereto. A person skilled in the art may understand that one receiving device may usually correspond to a plurality of control devices. For example, when the receiving device 402 is a television display, the control device 403 may be a remote control, or may be a physical button on the television. With the development of television display technologies, the control device 403 may even be a touch panel.

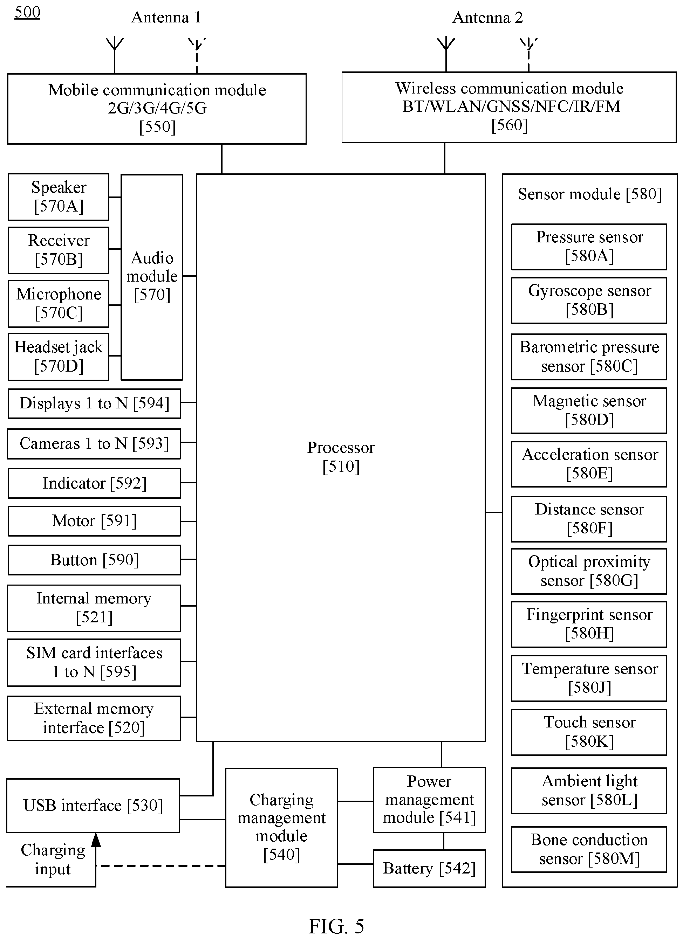

FIG. 5 is a schematic of a hardware structure of an electronic device according to an embodiment of this disclosure. The electronic device 500 shown in FIG. 5 is merely an example, and the electronic device 500 may have more or fewer components than those shown in the figure, or two or more components may be combined, or there may be a different component configuration. Various components shown in the figure may be implemented in hardware, software, or a combination of hardware and software that includes one or more signal processing and/or application-specific integrated circuits.

The electronic device 500 may include a processor 510, an external memory interface 520, an internal memory 521, a universal serial bus (universal serial bus, USB) interface 530, a charging management module 540, a power management module 541, a battery 542, an antenna 1, an antenna 2, a mobile communication module 550, a wireless communication module 560, an audio module 570, a speaker 570A, a receiver 570B, a microphone 570C, a headset jack 570D, a sensor module 580, a button 590, a motor 591, an indicator 592, a camera 593, a display 594, a subscriber identification module (subscriber identification module, SIM) card interface 595, and the like. The sensor module 580 may include a pressure sensor 580A, a gyroscope sensor 580B, a barometric pressure sensor 580C, a magnetic sensor 580D, an acceleration sensor 580E, a distance sensor 580F, an optical proximity sensor 580G, a fingerprint sensor 580H, a temperature sensor 580J, a touch sensor 580K, an ambient light sensor 580L, a bone conduction sensor 580M, and the like.

The processor 510 may include one or more processing units. For example, the processor 510 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors. In some embodiments, the electronic device 500 may alternatively include one or more processors 510. The controller may generate an operation control signal based on an instruction operation code and a time sequence signal, to control instruction reading and instruction execution. In some other embodiments, a memory may be further disposed in the processor 510, and is configured to store instructions and data. For example, the memory in the processor 510 may be a cache. The memory may store an instruction or data just used or repeatedly used by the processor 510. If the processor 510 needs to use the instruction or the data again, the processor 510 may directly invoke the instruction or the data from the memory. In this way, repeated access is avoided, waiting time of the processor 510 is reduced, and efficiency of processing data or executing instructions by the electronic device 500 is improved.

In some embodiments, the processor 510 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface is an interface that conforms to a USB standard specification, and may be specifically a mini USB interface, a micro USB interface, a USB Type C interface, or the like. The USB interface may be configured to connect to a charger to charge the electronic device 500, or may be configured to transmit data between the electronic device 500 and a peripheral device. The USB interface may alternatively be configured to connect to a headset, and play audio through the headset.

It may be understood that an interface connection relationship between the modules shown in this embodiment of this disclosure is merely an example for description, and does not constitute a limitation on the structure of the electronic device 500. In some other embodiments of this disclosure, the electronic device 500 may alternatively use an interface connection manner different from an interface connection manner in this embodiment, or use a combination of a plurality of interface connection manners.

A wireless communication function of the electronic device 500 may be implemented through the antenna 1, the antenna 2, the mobile communication module 550, the wireless communication module 560, the modem processor, the baseband processor, and the like.

The antenna 1 and the antenna 2 are configured to transmit and receive an electromagnetic wave signal. Each antenna in the electronic device 500 may be configured to cover one or more communication frequency bands. Different antennas may further be multiplexed to improve antenna utilization. For example, the antenna 1 may be multiplexed as a diversity antenna in a wireless local area network. In some other embodiments, the antenna may be used in combination with a tuning switch.

The mobile communication module 550 may provide a wireless communication solution that includes 2G/3G/4G/5G or the like and that is applied to the electronic device 500. The mobile communication module 550 may include at least one filter, a switch, a power amplifier, a low noise amplifier (low noise amplifier, LNA), and the like. The mobile communication module 550 may receive an electromagnetic wave through the antenna 1, perform processing such as filtering or amplification on the received electromagnetic wave, and transmit a processed electromagnetic wave to the modem processor for demodulation. The mobile communication module 550 may further amplify a signal modulated by the modem processor, and convert, through the antenna 1, the signal into an electromagnetic wave for radiation. In some embodiments, at least some functional modules of the mobile communication module 550 may be disposed in the processor 510. In some embodiments, at least some functional modules of the mobile communication module 550 may be disposed in a same device as at least some modules of the processor 510.

The wireless communication module 560 may provide a wireless communication solution that is applied to the electronic device 500 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 560 may be one or more components integrating at least one communication processing module. The wireless communication module 560 receives an electromagnetic wave through the antenna 2, performs frequency modulation and filtering processing on an electromagnetic wave signal, and sends a processed signal to the processor 510. The wireless communication module 560 may further receive a to-be-sent signal from the processor 510, perform frequency modulation and amplification on the to-be-sent signal, and convert, through the antenna 2, the signal into an electromagnetic wave for radiation.

The electronic device 500 implements a display function by using the GPU, the display 594, the application processor, and the like. The GPU is an image processing microprocessor and connects the display 594 to the application processor. The GPU is configured to perform mathematical and geometric calculations, and is configured for image rendering. The processor 510 may include one or more GPUs, and the GPUs execute program instructions to generate or change display information.

The display 594 is configured to display an image, a video, and the like. The display 594 includes a display panel. In some embodiments, the electronic device 500 may include one or N displays 594, where N is a positive integer greater than 1.

The electronic device 500 can implement a photographing function by using the ISP, the camera 593, the video codec, the GPU, the display 594, the application processor, and the like. The camera 593 is configured to capture a static image or a video. An optical image of an object is generated through a lens, and is projected to a photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal of a format like RGB or YUV. In some embodiments, the electronic device 500 may include one or N cameras 593, where N is a positive integer greater than 1.

The speaker 570A, also referred to as a "horn", is configured to convert an audio electrical signal into a sound signal. The electronic device 500 may be used to listen to music or answer a hands-free call through the speaker 570A.

The microphone 570C, also referred to as a "mike" or a "mic", is configured to convert a sound signal into an electrical signal. When making a call or sending voice information, a user may make a sound near the microphone 570C through the mouth of the user, to input a sound signal to the microphone 570C. At least one microphone 570C may be disposed in the electronic device 500. In some other embodiments, two microphones 570C may be disposed in the electronic device 500, to collect a sound signal and further implement a noise reduction function. In some other embodiments, three, four, or more microphones 570C may alternatively be disposed in the electronic device 500, to collect a sound signal, implement noise reduction, identify a sound source, implement a directional recording function, and the like.

In some embodiments, the electronic device may be a portable electronic device that further includes other functions such as a personal digital assistant function and/or a music player function, for example, a mobile phone, a tablet computer, a wearable electronic device having a wireless communication function (for example, a smart watch), a video player, a headset, a sound box, or a camera. An example embodiment of the portable electronic device includes but is not limited to a portable electronic device using iOS^{®}, Android^{®}, Microsoft^{®}, or another operating system. The portable electronic device may alternatively be another portable electronic device, for example a laptop (laptop) or the like. It should be further understood that, in some other embodiments, the foregoing electronic device may not be a portable electronic device but a desktop computer, a television, a sound box, a camera, or the like.

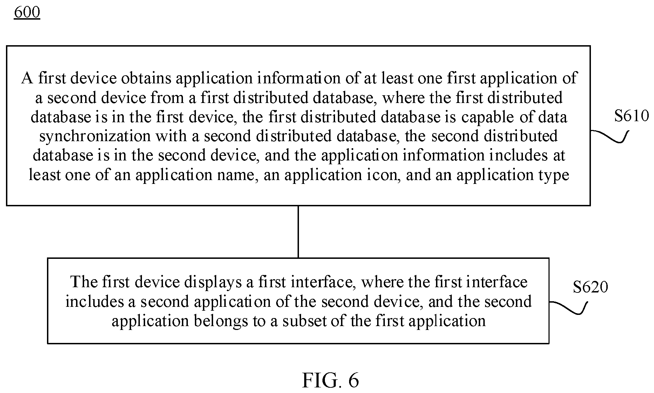

FIG. 6 is a schematic flowchart of an example of a cross-device application control method according to an embodiment of this disclosure.

S610: A first device obtains application information of at least one first application of a second device from a first distributed database, where the first distributed database is in the first device, the first distributed database is capable of data synchronization with a second distributed database, the second distributed database is in the second device, and the application information includes at least one of an application name, an application icon, and an application type.

The first device may be a device having an application receiving capability, for example, a large screen, a cockpit, or a display. The second device may be a device having an application sharing capability, for example, a mobile phone. The first application may include a plurality of applications.

S620: The first device displays a first interface, where the first interface includes a second application of the second device, and the second application belongs to a subset of the first application.

Alternatively, the subset may be a universal set, and the second application may include a plurality of applications. In this way, the first interface may specifically display a list of applications of the second application.

Optionally, the method further includes: The first device receives a first operation from a user, where the first operation indicates the first device to display the second application of the second device.

By way of example, and not limitation, the first operation may be that the user logs in to a first account on the first device, and the first account is an account logged in to by the user on the second device. Alternatively, the first operation may be that the user displays a two-dimensional code of the first device on the first device, and scans the two-dimensional code of the first device by using the second device. When the first device is a cockpit of a vehicle, the first operation may be that the user gets on the cockpit of the vehicle, that is, gets on a driver seat of the vehicle.

The method further includes: The first device obtains a list of applications on the second device that are allowed to be shared and/or a list of applications on the second device that are forbidden to be shared, where the list of applications on the second device that are allowed to be shared and/or the list of applications on the second device that are forbidden to be shared are/is generated by the second device based on a second operation of the user. The first device filters the application information of the first application based on the list of applications on the second device that are allowed to be shared and/or the list of applications on the second device that are forbidden to be shared, to obtain the second application, where the second application belongs to the list of applications on the second device that are allowed to be shared. The first device may obtain, from a server, the list of applications on the second device that are allowed to be shared and/or the list of applications on the second device that are forbidden to be shared. In this way, the list of applications that are allowed to be shared can be displayed on a receiving device (the first device) based on a user intention, to ensure data security of the user, so that the user can perform cross-device application management, and seamlessly use, on a current device, an application installed on another device.

Optionally, the method further includes: The first device obtains first information from the second device, where the first information includes projection data of a third application, the third application belongs to the second application, and the projection data of the third application includes a display policy for the third application. The first device displays a second interface based on the first information, where the second interface includes the third application, and the third application is capable of invoking a hardware capability of the first device. In this way, an application may be supported in directly using various hardware capabilities of the receiving device (the first device).

Optionally, the method further includes: The first device receives a third operation from the user, where the third operation indicates the first device to display the third application of the second device.

Optionally, the method further includes: The first device sends second information to the second device, where the second information includes application information of the third application and the hardware capability of the first device, and the second information is used by the second device to generate the first information. In this way, a display policy can be specified based on a hardware capability of the receiving device, to support the third application in being adaptively displayed in a resolution of the receiving device, and a device screen size and a layout of the receiving device.

Optionally, the method further includes: The first device receives a first control instruction from a third device, where the third device is a control device. In response to the first control instruction, the first device controls movement of a cursor on a display interface of the first device, or in response to the first control instruction, the first device controls sliding of a display interface of the first device.

Optionally, the first control instruction is generated by the third device according to a second control instruction, and the second control instruction is generated by the third device based on a fourth operation of the user. In this way, a proper application control manner is selected based on a device control capability, cross-platform application control is supported, and a plurality of operation manners such as button operation and touch operation are supported.

According to the technical solutions of this disclosure, an existing application does not need to be modified, and a list of applications from different devices is supported in being displayed on a current device, so that the user can perform cross-device application management, and seamlessly use, on the current device, an application installed on another device.

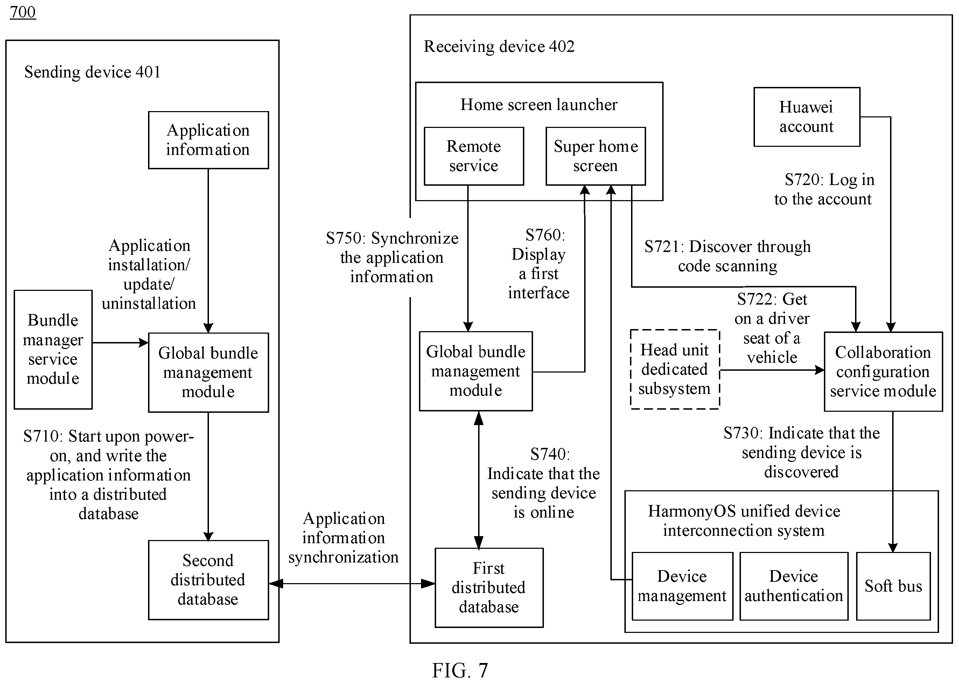

FIG. 7 is a schematic of a specific example of a cross-device application control method according to an embodiment of this disclosure. A sending device 401 may be the second device in FIG. 6, and a receiving device 402 may be the first device in FIG. 6.

S710: The sending device 401 is started upon power-on, and writes application information into a second distributed database.

The sending device 401 may receive a first operation of a user, where the first operation indicates the sending device 401 to be started upon power-on. A global bundle management module of the sending device 401 may obtain application information, and store the application information in a distributed database. The application information includes full information of an application locally installed on the sending device 401, and the information includes but is not limited to a bundle name, an application name, an application icon, an application type, and the like. When the application information of the sending device 401 has update, for example, application installation, application update, or application uninstallation, the bundle management service module of the sending device 401 may send updated application information to the global bundle management module, and the global bundle management module stores the updated application information in the second distributed database.

The receiving device 402 may receive a second operation of the user, where the second operation indicates the receiving device 402 to display a list of applications on the sending device 401 that are allowed to be shared. The second operation may have the following cases:

### Case 1:

S720: The user logs in to an account on the receiving device 402.

The account logged in to by the user on the receiving device 402 and an account logged in to by the user on the sending device 401 are the same. Optionally, that the user logs in to an account on the receiving device 402 may further include: The user switches an account logged in to on the receiving device 402 to the account logged in to on the sending device 401.

### Case 2:

S721: The user uses the sending device 401 to scan a code, to discover the receiving device 402.

Specifically, the user may use the sending device 401 to scan a two-dimensional code identifier of the receiving device 402, to establish a connection to the receiving device 402.

### Case 3:

S722: The user gets on a driver seat of a vehicle in which the receiving device 402 is located.

In this case, the receiving device 402 may be a cockpit of the vehicle. The user may preset a sending device corresponding to the receiving device 402 (cockpit), for example, the sending device 401. When the user gets on the driver seat of the vehicle, a head unit dedicated subsystem of the receiving device 402 (cockpit) may notify a collaboration configuration service module of the receiving device 402 (cockpit) that the user gets on the driver seat of the vehicle, so that the receiving device 402 can discover that the sending device 401 preset by the user is online, and actively seeks to establish a connection to the sending device 401.

S730: The receiving device 402 invokes the collaboration configuration service module to notify a soft bus that the sending device 401 is discovered.

For example, the soft bus is in a HarmonyOS unified device interconnection system, and the system may further include a device management module and a device authentication module.

S740: The receiving device 402 invokes the device management module to notify a home screen launcher that the sending device 401 is online.

Specifically, the device management module of the receiving device 402 may send a notification to a super home screen in the home screen launcher, to indicate that the sending device 401 is online, and can synchronize application data.

S750: The receiving device 402 invokes a remote service module to start to synchronize the application information of the sending device 401.

Specifically, the remote service module of the receiving device 402 may invoke a global bundle management module interface to obtain the application information of the sending device 401 from a first distributed database. The application information of the sending device 401 is stored in the second distributed database, and the first distributed database is capable of data synchronization with the second distributed database.

S760: The receiving device 402 invokes the super home screen, to display a first interface.

Specifically, after the synchronization of the application information of the sending device 401 ends, the receiving device 402 invokes the super home screen to display the first interface, where the first interface includes the list of applications on the sending device 401 that are allowed to be shared. The super home screen may filter the obtained application information of the sending device 401 based on an application blocklist and an application trustlist (that is, a list of applications that are forbidden to be shared and the list of applications that are allowed to be shared) of the sending device 401, and finally display the list of applications on the sending device 401 that are allowed to be shared.

According to the technical solution provided in this disclosure, an existing application does not need to be modified, and a list of applications from different devices is supported in being displayed on a current device, so that the user can perform cross-device application management, and seamlessly use, on the current device, an application installed on another device.

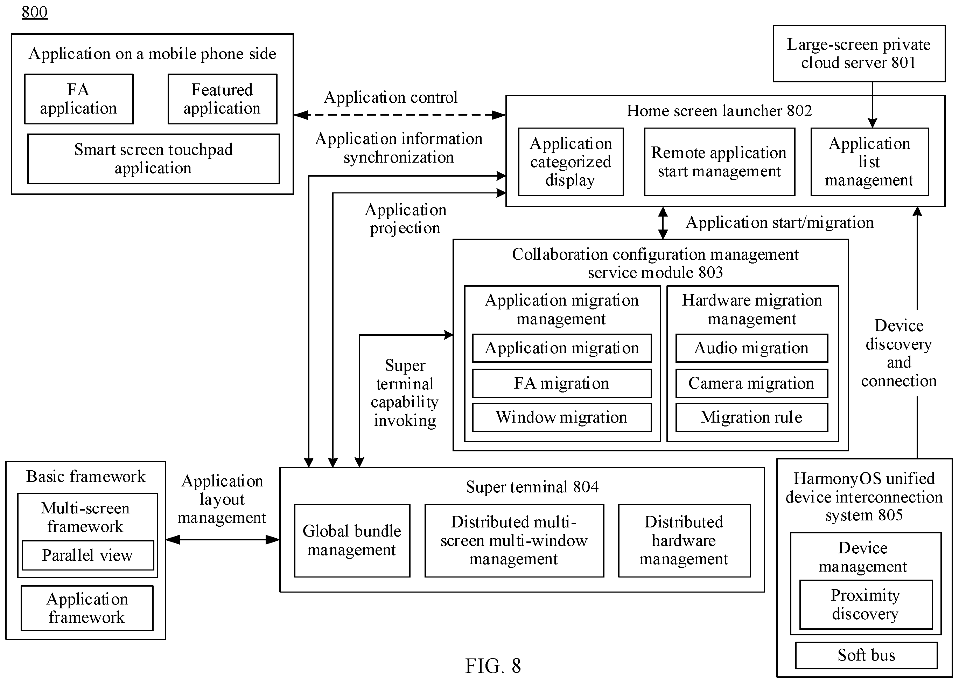

FIG. 8 is an overall architectural diagram of an example of a cross-device application control method according to an embodiment of this disclosure. In FIG. 8, an example in which a receiving device is a large screen and a sending device is a mobile phone is used to show an architectural diagram provided in an embodiment of this disclosure. The architectural diagram shown in FIG. 8 may be used to implement the method shown in FIG. 7.

As shown in FIG. 8, an architecture 800 includes a large-screen private cloud server 801, a home screen launcher 802, a collaboration configuration management service module 803, a super terminal 804, and a HarmonyOS unified device interconnection system 805. The home screen launcher 802 is located at an application layer of a system, and is responsible for connection and display of a super home screen. When a large screen is connected to a mobile phone, the home screen launcher 802 is used for synchronization and categorized display of a mobile phone application, and remote start and list management of the mobile phone application. The collaboration configuration management service module 803 is configured to provide a collaboration service atomization capability including an application migration management capability and a hardware migration management capability. The application migration management capability includes an application migration capability, a feature capability (feature ability, FA), migration capability, a window migration capability, and the like. The hardware migration management capability includes an audio migration capability, a camera migration capability, a migration rule, and the like. The super terminal 804 is configured to provide a global bundle management capability, a distributed multi-screen multi-window management capability, and a distributed hardware management capability. The global bundle management capability mainly includes a global bundle information synchronization capability, global bundle information includes information about an application, and the application may be an Android application, a HarmonyOS application, or the like. The distributed multi-screen multi-window management capability includes a window display adaptation capability that supports a mobile phone application in being displayed on the large screen device in a landscape mode, a parallel view mode, and a portrait mode. The HarmonyOS unified device interconnection system 805 includes a device management module and a soft bus. The device management module is configured to provide a capability of proximity discovery between devices, and the soft bus is configured to communicate between modules.

The home screen launcher 802 may communicate with the super terminal 804, to implement synchronization of application information and projection of an application on the home screen launcher 802. The home screen launcher 802 may further communicate with the HarmonyOS unified device interconnection system 805. When the HarmonyOS unified device interconnection system 805 discovers that the mobile phone is connected, the HarmonyOS unified device interconnection system 805 may notify the home screen launcher 802. The home screen launcher 802 may further obtain a blocklist and a trustlist of the mobile phone application from the cloud server 801, where the blocklist and the trustlist of the mobile phone application may be set by a user, and may alternatively be automatically generated by the system based on a type of a device (including a receiving device and a sending device). The home screen launcher 802 may further receive an operation of starting and migrating an application by a user, and invoke the collaboration configuration management service module 803 to implement application starting and migration. The collaboration configuration management service module 803 may make a decision on a collaboration policy based on a configurable collaboration rule, and invoke a distributed capability of the super terminal 804 to implement collaboration. Optionally, the application on the mobile phone side may include a smart screen touchpad application, and the application supports a touch operation of a mobile phone projection application and a touch operation of a large-screen application.

It should be understood that the foregoing solution may be implemented based on a HarmonyOS system. A HarmonyOS-based distributed interconnection technology supports device discovery, connection, and authentication, application data synchronization relies on a distributed data technology, application adaptation, application migration, and hardware migration capabilities rely on a collaboration configuration management service, and an application control capability relies on an adaptive application control service. Optionally, the method may be implemented based on another system, for example, iOS^{®}, Android^{®}, Microsoft^{®}, or another operating system described above. This is not limited in this disclosure.

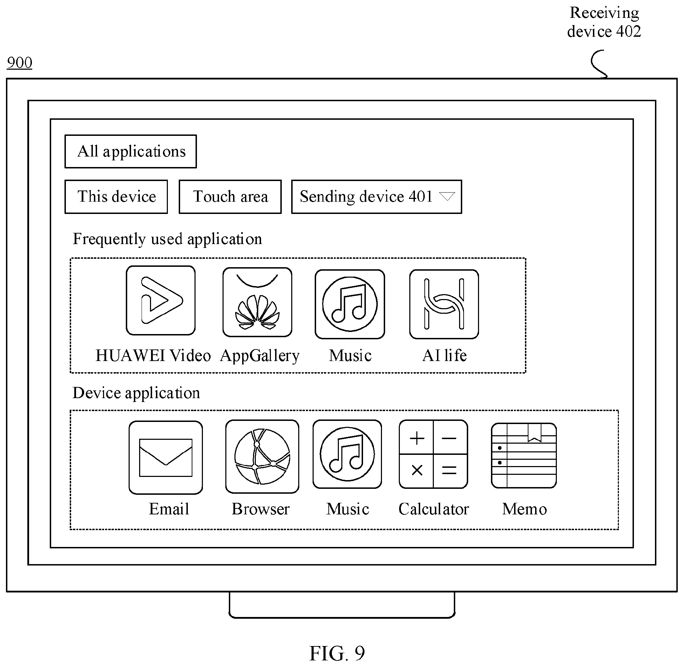

FIG. 9 is a diagram of a user interface of a specific example of a cross-device application control method according to an embodiment of this disclosure.

As shown in FIG. 9, a receiving device 402 (for example, a large screen) may obtain, based on a user operation, application information of a sending device 401 (for example, the sending device 401 may be a mobile phone, and a model may be Mate 40), to display a first interface. The first interface includes a list of applications on the sending device 401 that are allowed to be shared. Specifically, a super home screen module in a home screen launcher of the receiving device 402 is responsible for displaying the application list of the sending device 401. The display interface supports an interface element layout. The first row may display a frequently used application. Optionally, the first row may display a maximum of M recently used applications. For example, there are four frequently used applications shown in the figure, that is, M is 4. It should be understood that a value of M may vary with a size of a page and an application icon. For example, M may be 5, 6, or 7. This is not limited in this disclosure. The second row may display other application icons of the device. By way of example, and not limitation, application icons displayed in the second row may be arranged from A to Z based on initial letters of application names. When the application information of the sending device 401 changes, the first interface of the receiving device 402 is synchronously updated and displayed.

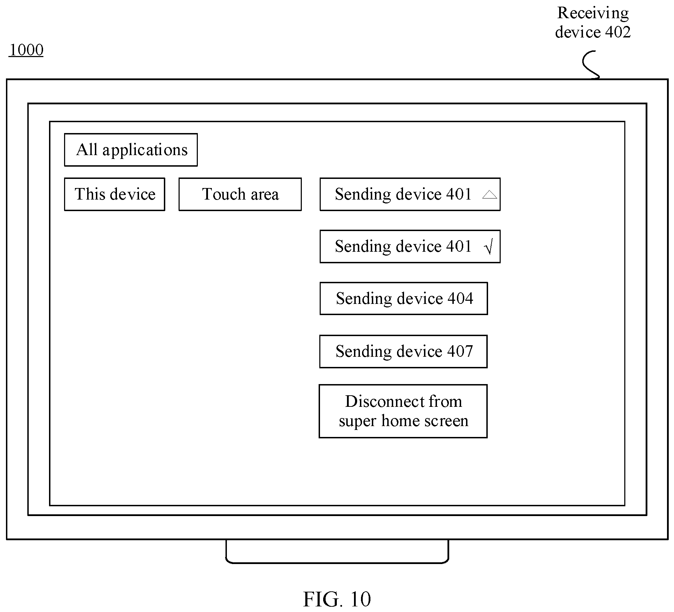

FIG. 10 is a diagram of another user interface of a specific example of a cross-device application control method according to an embodiment of this disclosure.

As shown in FIG. 10, a receiving device 402 may be simultaneously connected to a plurality of sending devices, that is, there may be one or more sending devices 401. By way of example, and not limitation, a user may perform an operation on the receiving device 402 to switch the sending devices. For example, the user may tap an OK key on a keyboard tabulator key (tabulator key, Tab) on the receiving device 402, and a drop-down menu shown in FIG. 10 is displayed. The menu displays a list of sending devices that can be switched. The list may include a plurality of sending devices, for example, a sending device 401, a sending device 404, and a sending device 407. By way of example, and not limitation, models of the sending devices may be Mate 40, P50, Mate 30 Pro, or the like. After the user taps another sending device, the corresponding sending device may perform secondary confirmation, and the receiving device 402 may display a list of applications that are allowed to be shared and that are of the corresponding sending device.

It should be understood that, the foregoing describes the technical solutions of this disclosure by using an example in which a model of the sending device is Mate 40, P50, or Mate 30 Pro, which should not be construed as a limitation on the technical solutions of this disclosure. When the sending device is a device of another model or another vendor, the technical solutions of this disclosure are also applicable.

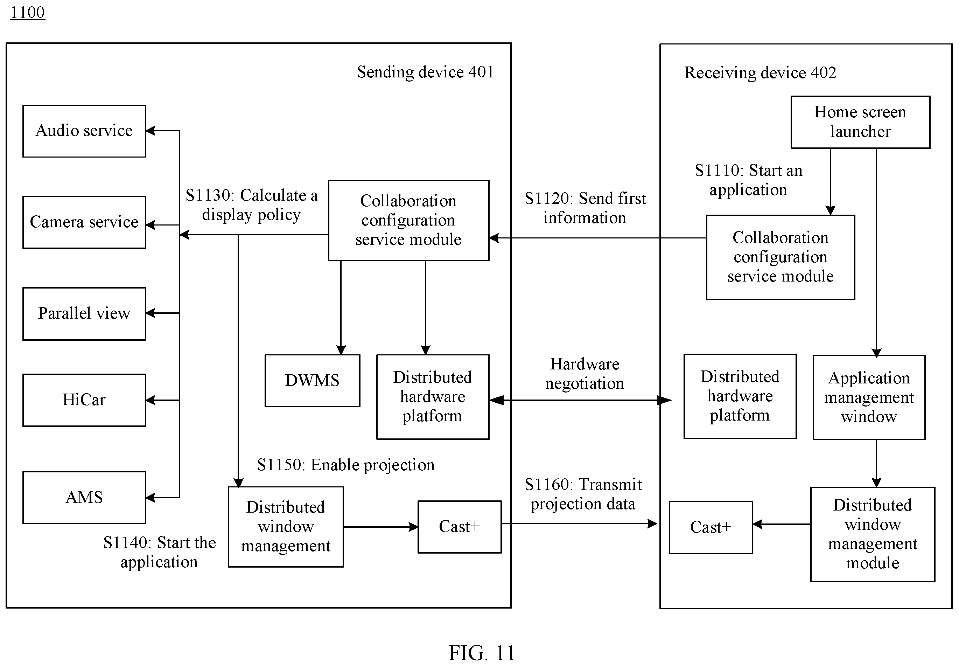

FIG. 11 is a schematic flowchart of another specific example of a cross-device application control method according to an embodiment of this disclosure. The method may be performed after the method 700 shown in FIG. 7.

S1110: A user starts an application on a receiving device 402.

The user may start an application on a first interface displayed by the receiving device 402. The application may be one of applications on a sending device 401 that are allowed to be shared. For ease of description, the application may be referred to as a first application.

S1120: The receiving device 402 sends first information to the sending device 401.

The first information includes application information of the first application and a hardware capability of the receiving device 402. Hardware capabilities of a device include a microphone capability, a voice capability, and a camera capability of the device. Specifically, the receiving device 402 may invoke a collaboration configuration service module to send the first information to the sending device 401. The first information indicates a collaboration configuration service module of the sending device 401 to invoke a distributed window management service (distribute window management service, DWMS) to create a virtual display (display), and indicates a distributed hardware platform of the sending device 401 to perform hardware negotiation with a distributed hardware platform of the receiving device 402, to obtain the hardware capability of the receiving device 402.

S1130: The sending device 401 calculates a display policy.

Specifically, the collaboration configuration service module of the sending device 401 calculates the display policy (for example, parallel view or landscape display) for the first application based on the first application and the hardware capability of the receiving device 402.

S1140: The sending device 401 starts the application.

Specifically, the collaboration configuration service module of the sending device 401 may invoke an AMS interface to start the first application, and send the first application to a virtual display for display.

S1150: The sending device 401 enables projection.

Specifically, the sending device 401 may invoke the distributed window management module to prepare to project the virtual display to the receiving device 402.

S1160: The sending device 401 sends projection data to the receiving device 402.

Specifically, the sending device 401 may send second information to the receiving device 402, where the second information includes the projection data of the first application, and the projection data of the first application includes the display policy that is for the first application and that is determined by the sending device 401 based on the first information. The receiving device 402 may display a second interface, where the second interface includes the first application, and the first application is capable of invoking the hardware capability of the receiving device 402. For example, when the receiving device is a large screen device, the application is supported in being displayed in a 4K resolution. When the receiving device is a tablet, the first application may be supported in being displayed in a 2K resolution. The first application may use a microphone of the receiving device to perform application recording, may use a sound box of the receiving device to perform voice playing, may use a camera to perform video recording, may use a global positioning system (global positioning system, GPS) to perform positioning, or the like.

According to the technical solutions provided in this disclosure, an application of a sending device can be supported in being adaptively displayed in a resolution, a device screen size, and a layout of a receiving device, and further, the application of the sending device can be supported in directly using a hardware capability of the receiving device.

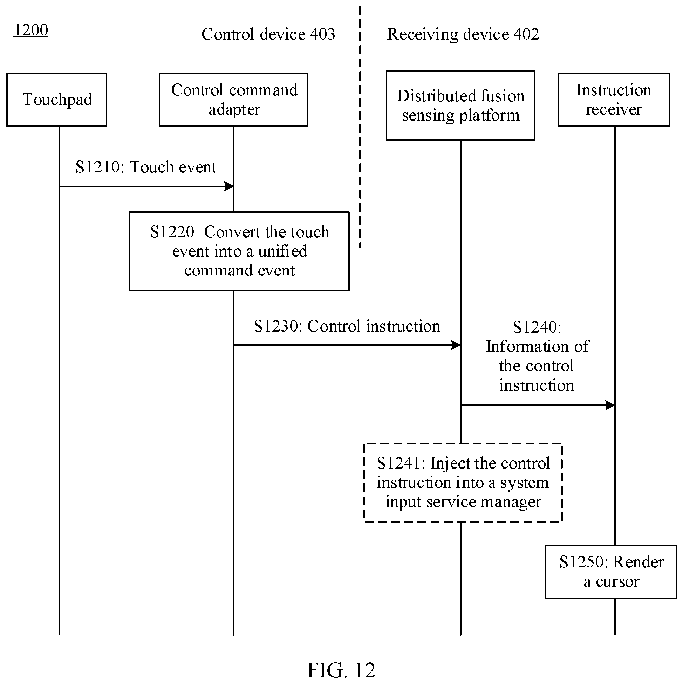

FIG. 12 is an interaction diagram of an example of a cross-device application control method according to an embodiment of this disclosure. This embodiment outputs an example method for controlling, by a control device, an application that belongs to a sending device and is displayed on a receiving device. Applications on the sending device 401 and the receiving device 402 may be applications on different platforms, for example, a HarmonyOS application or an Android application. In addition, a command that can be obtained by the control device 403 is also related to the device platform. Therefore, control instructions supported by applications on different devices are completely different, and unified adaptation and conversion are needed.

S1210: A touchpad of the control device 403 sends a touch event to a control command adapter of the control device 403.

The control device 403 may generate a second control instruction (for example, a touch event) based on a third operation of a user on the touchpad. Optionally, when the control device 403 includes a physical button, the user may also perform the third operation on the physical button to generate the second control instruction (a button event). S1220: The control device 403 converts the touch event into a unified command event.

Specifically, the control command adapter of the control device 403 converts the second control instruction (for example, the touch event) into a first control instruction (the unified command event) based on a type of the receiving device 402.

S1230: The control device 403 sends the control instruction to the receiving device 402.

Specifically, the control device 403 may send the converted first control instruction (the unified command event) to a distributed fusion sensing platform of the receiving device 402.

S1240: The receiving device 402 sends information of the control instruction to an instruction receiver.

The information of the control instruction includes parameters such as a type of the control instruction, a coordinate position of the control instruction, and a moving speed of the control instruction.

Optionally, the receiving device 402 may further perform S 1241 to inject the control instruction into a system input service manager.

The distributed fusion sensing platform of the receiving device 402 obtains the first control instruction sent by the control device 403, and sends information of the first control instruction to the system input service manager. The system input service manager distributes the first control instruction to an upper-layer application for processing. S1250: The instruction receiver of the receiving device 402 renders a cursor.

Specifically, the instruction receiver of the receiving device 402 renders the cursor based on the information of the first control instruction, and the rendered cursor is displayed on the receiving device 402.

According to the technical solutions of this disclosure, a button event or a movement event of the user is converted on the control device, and adapted to a control instruction that should be executed by the receiving device, to support the user in performing cross-platform control on an application.

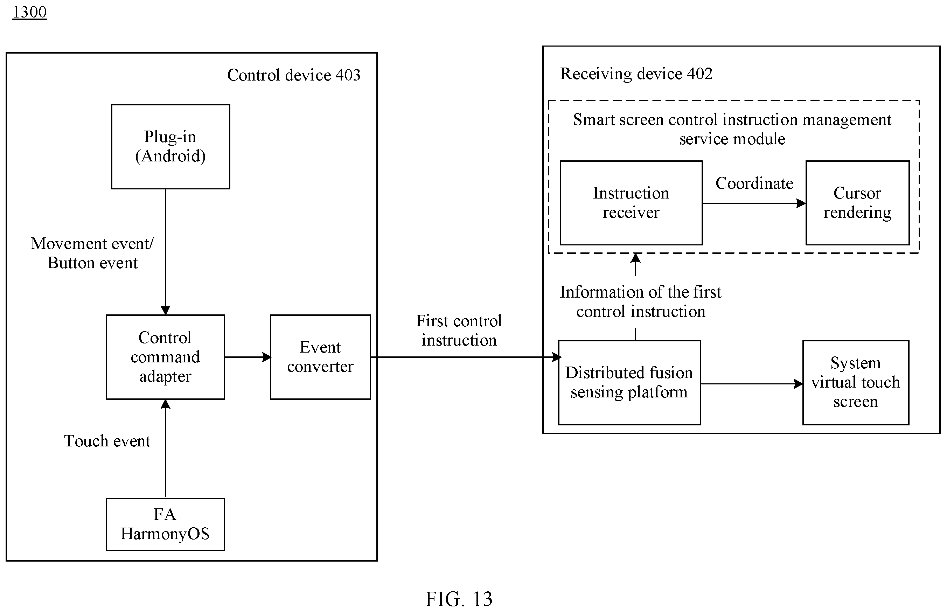

FIG. 13 is a schematic flowchart of still another specific example of a cross-device application control method according to an embodiment of this disclosure. FIG. 13 shows the method in FIG. 12 through showing interaction between functional modules.

As shown in FIG. 13, in the control device 403, FA HarmonyOS may send a touch event to a control command adapter, and a plug-in of an Android system may also send a movement event/button event to the control command adapter. The control command adapter and the event converter convert the touch event, the movement event/button event, and the like (collectively referred to as a second control instruction) into a first control instruction (a unified command event). The receiving device 402 receives the first control instruction by using a distributed sensing platform, and transmits information of the first control instruction to a smart screen control instruction management service module. The smart screen control instruction management service module includes an instruction receiver. The instruction receiver renders a cursor based on the information of the first control instruction, and the rendered cursor is displayed on the receiving device 402.

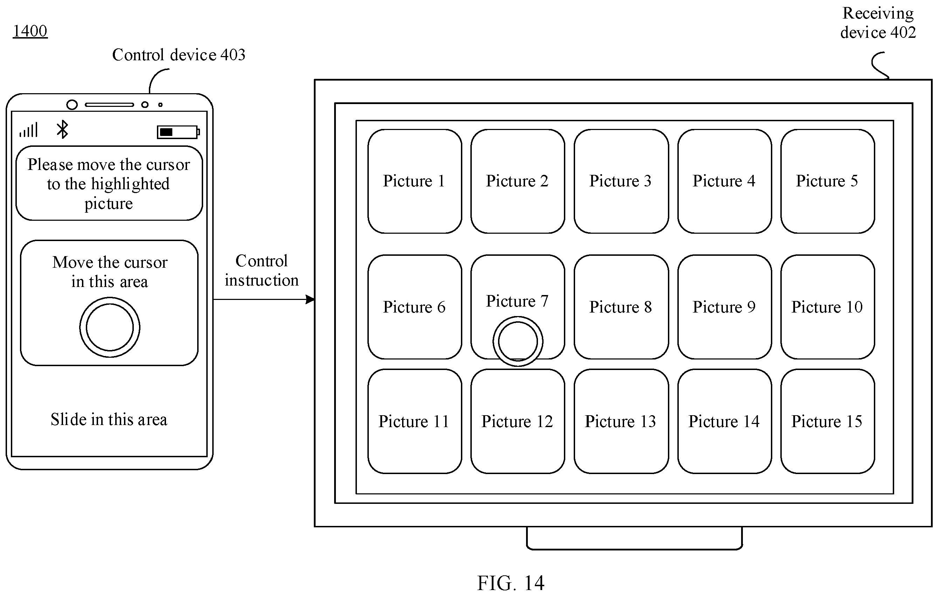

FIG. 14 is a diagram of a user interface of a specific example of a cross-device application control method according to an embodiment of this disclosure. As shown in FIG. 14, the user may perform an operation in a specified area on the control device 403, and control the cursor displayed by the receiving device 402 to move to a highlighted picture (for example, a picture 7).

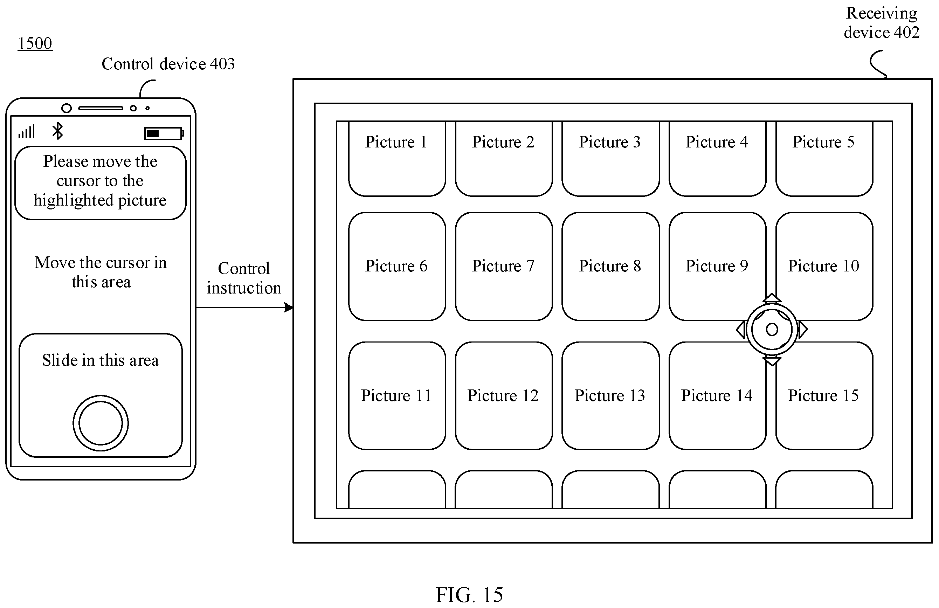

FIG. 15 is a diagram of another user interface of a specific example of a cross-device application control method according to an embodiment of this disclosure. As shown in FIG. 15, the user may perform an operation in a specified area on the control device 403, and control an interface displayed by the receiving device 402 to slide up or down or slide left or right. By way of example, and not limitation, in response to an operation performed by the user in the specified area on the control device 403, an interface displayed by the receiving device 402 in FIG. 15 slides up relative to an interface displayed by the receiving device 402 in FIG. 14.

In embodiments provided in this disclosure, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this disclosure essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this disclosure. The storage medium includes any medium that can store program code, such as a USB flash drive, a removable hard disk, a read-only memory (read-only memory, ROM), a random access memory (random access memory, RAM), a magnetic disk, or a compact disc.

The foregoing descriptions are merely specific implementations of this disclosure, but are not intended to limit the protection scope of this disclosure. The protection scope of this disclosure shall be subject to the protection scope of the claims.

## Claims

1. A cross-device application control method, comprising:
obtaining, by a first device (201, 402), application information of at least one first application of a second device (202, 401) from a first distributed database, wherein the first distributed database is in the first device (201, 402), the first distributed database is capable of data synchronization with a second distributed database, the second distributed database is in the second device (202, 401), and the application information comprises at least one of an application name, an application icon, and an application type;
displaying, by the first device (201, 402), a first interface, wherein the first interface comprises a second application of the second device (202, 401), and the second application belongs to a subset of the first application in the sense that the at least one first application comprises a plurality of applications and the second application comprises one or more or all applications of the plurality of applications of the at least one first application;
receiving, by the first device (201, 402), a first operation from a user, wherein the first operation indicates the first device (201, 402) to display the second application of the second device (202, 401);
obtaining, by the first device (201, 402), a list of applications on the second device (202, 401) that are forbidden to be shared, wherein the list of applications on the second device (202, 401) that are forbidden to be shared is generated by the second device (202, 401) based on a second operation of the user; and
filtering, by the first device (201, 402), the application information of the first application based on the list of applications on the second device (202, 401) that are forbidden to be shared, to obtain the second application, wherein the second application belongs to a list of applications on the second device (202, 401) that are allowed to be shared.

2. The method according to claim 1, wherein the method further comprises:
obtaining, by the first device (201, 402), first information from the second device (202, 401), wherein the first information comprises projection data of a third application, the third application belongs to the second application, and the projection data of the third application comprises a display policy for the third application; and
displaying, by the first device (201, 402), a second interface based on the first information, wherein the second interface comprises the third application, and the third application is capable of invoking a hardware capability of the first device (201, 402).

3. The method according to claim 2, wherein the method further comprises:
receiving, by the first device (201, 402), a third operation from the user, wherein the third operation indicates the first device (201, 402) to display the third application of the second device (202, 401).

4. The method according to claim 2 or 3, wherein the method further comprises:
sending, by the first device (201, 402), second information to the second device (202, 401), wherein the second information comprises application information of the third application and the hardware capability of the first device (201, 402), and the second information is used by the second device (202, 401) to generate the first information.

5. The method according to any one of claims 1 to 4, wherein the method further comprises:
receiving, by the first device (201, 402), a first control instruction from a third device, wherein the third device is a control device; and
controlling, by the first device (201, 402) in response to the first control instruction, movement of a cursor on a display interface of the first device (201, 402), or
controlling, by the first device (201, 402) in response to the first control instruction, sliding of a display interface of the first device (201, 402).

6. The method according to claim 5, wherein the first control instruction is generated by the third device according to a second control instruction, and the second control instruction is generated by the third device based on a fourth operation of the user.

7. A cross-device application control method, comprising:
obtaining, by a second device (202, 401), application information of at least one first application, wherein the application information comprises at least one of an application name, an application icon, and an application type;
storing, by the second device (202, 401), the application information of the first application in a second distributed database, wherein the second distributed database is capable of data synchronization with a first distributed database, the second distributed database is set in the second device (202, 401), and the first distributed database is set in a first device (201, 402);
receiving, by the second device (202, 401), a first operation from a user, wherein the first operation indicates the second device (202, 401) to store the application information of the first application in the second distributed database; receiving, by the second device (202, 401), a second operation from the user, wherein the second operation indicates the second device (202, 401) to generate a list of applications that are forbidden to be shared;
generating, by the second device (202, 401), the list of applications that are forbidden to be shared, wherein the list of applications that are forbidden to be shared is used by the first device (201, 402) to filter the application information of the first application, to obtain a second application, the second application belongs to a subset of the first application, in the sense that the at least one first application comprises a plurality of applications and the second application comprises one or more or all applications of the plurality of applications of the at least one first application and the second application belongs to a list of applications on the second device (202, 401) that are allowed to be shared; and
sending, by the second device (202, 401), the list of applications that are forbidden to be shared.

8. The method according to claim 7, wherein the method further comprises:
receiving, by the second device (202, 401), first information from the first device (201, 402), wherein the first information comprises application information of a third application and a hardware capability of the first device (201, 402), and the third application belongs to the second application of the second device (202, 401);
determining, by the second device (202, 401), projection data of the third application, wherein the projection data of the third application comprises a display policy for the third application; and
sending, by the second device (202, 401), second information to the first device (201, 402), wherein the second information comprises the projection data of the third application, and the third application is capable of invoking the hardware capability of the first device (201, 402).

9. A computer-readable storage medium, comprising computer instructions, wherein when the computer instructions are run on a first electronic device (500), the first electronic device (500) is enabled to perform the method according to any one of claims 1 to 6 or any one of claims 7 to 8.

10. A chip, comprising at least one processor (510) and an interface circuit, wherein the interface circuit is configured to provide program instructions or data for the at least one processor (510), and the at least one processor (510) is configured to execute the instructions, to implement the method according to any one of claims 1 to 6 or any one of claims 7 to 8.

11. A first electronic device (500), wherein the first electronic device (500) comprises a processor (510) and a memory, and is configured to perform the method according to any one of claims 1 to 6 or any one of claims 7 to 8.

## Patentansprüche

1. Vorrichtungsübergreifendes Anwendungssteuerverfahren, umfassend:
Erhalten, in einer ersten Vorrichtung (201, 402), von Anwendungsinformationen von mindestens einer ersten Anwendung einer zweiten Vorrichtung (202, 401) aus einer ersten verteilten Datenbank, wobei sich die erste verteilte Datenbank in der ersten Vorrichtung (201, 402) befindet, wobei die erste verteilte Datenbank für eine Datensynchronisation mit einer zweiten verteilten Datenbank fähig ist, wobei sich die zweite verteilte Datenbank in der zweiten Vorrichtung (202, 401) befindet und wobei die Anwendungsinformationen mindestens einen von einem Anwendungsnamen, einem Anwendungssymbol, und einem Anwendungstyp umfassen;
Anzeigen, durch die erste Vorrichtung (201, 402), einer ersten Bedienoberfläche, wobei die erste Bedienoberfläche eine zweite Anwendung der zweiten Vorrichtung (202, 401) umfasst und wobei die zweite Anwendung zu einer Teilgruppe der ersten Anwendung in dem Sinne gehört, dass die mindestens eine erste Anwendung eine Vielzahl von Anwendungen umfasst und die zweite Anwendung eine oder mehrere oder alle Anwendungen aus der Vielzahl von Anwendungen der mindestens einen ersten Anwendung umfasst;
Empfangen, in der ersten Vorrichtung (201, 402), einer ersten Operation von einem Benutzer, wobei die erste Operation die erste Vorrichtung (201, 402) anweist, die zweite Anwendung der zweiten Vorrichtung (202, 401) anzuzeigen;
Erhalten, in der ersten Vorrichtung (201, 402), einer Liste von Anwendungen in der zweiten Vorrichtung (202, 401), die nicht gemeinsam genutzt werden dürfen, wobei die Liste von Anwendungen in der zweiten Vorrichtung (202, 401), die nicht gemeinsam genutzt werden dürfen, von der zweiten Vorrichtung (202, 401) basierend auf einer zweiten Operation des Benutzers erzeugt wird; und
Filtern, durch die erste Vorrichtung (201, 402), der Anwendungsinformationen der ersten Anwendung basierend auf der Liste von Anwendungen in der zweiten Vorrichtung (202, 401), die nicht gemeinsam genutzt werden dürfen, um die zweite Anwendung zu erhalten, wobei die zweite Anwendung zu einer Liste von Anwendungen in der zweiten Vorrichtung (202, 401) gehört, die gemeinsam genutzt werden dürfen.

2. Verfahren nach Anspruch 1, wobei das Verfahren ferner umfasst:
Erhalten, in der ersten Vorrichtung (201, 402), von ersten Informationen von der zweiten Vorrichtung (202, 401), wobei die ersten Informationen Projektionsdaten einer dritten Anwendung umfassen, wobei die dritte Anwendung zu der zweiten Anwendung gehört und wobei die Projektionsdaten der dritten Anwendung eine Anzeigerichtlinie für die dritte Anwendung umfassen; und
Anzeigen, durch die erste Vorrichtung (201, 402), einer zweiten Bedienoberfläche basierend auf den ersten Informationen, wobei die zweite Bedienoberfläche die dritte Anwendung umfasst und die dritte Anwendung fähig ist, eine Hardwarefähigkeit der ersten Vorrichtung (201, 402) aufzurufen.

3. Verfahren nach Anspruch 2, wobei das Verfahren ferner umfasst:
Empfangen, in der ersten Vorrichtung (201, 402), einer dritten Operation von dem Benutzer, wobei die dritte Operation die erste Vorrichtung (201, 402) anweist, die dritte Anwendung der zweiten Vorrichtung (202, 401) anzuzeigen.

4. Verfahren nach Anspruch 2 oder 3, wobei das Verfahren ferner umfasst:
Senden von zweiten Informationen von der ersten Vorrichtung (201, 402) an die zweite Vorrichtung (202, 401), wobei die zweiten Informationen Anwendungsinformationen der dritten Anwendung und die Hardwarefähigkeit der ersten Vorrichtung (201, 402) umfassen und wobei die zweiten Informationen von der zweiten Vorrichtung (202, 401) verwendet werden, um die ersten Informationen zu erzeugen.

5. Verfahren nach einem der Ansprüche 1 bis 4, wobei das Verfahren ferner umfasst:
Empfangen, in der ersten Vorrichtung (201, 402), einer ersten Steueranweisung von einer dritten Vorrichtung, wobei die dritte Vorrichtung eine Steuervorrichtung ist; und
Steuern, durch die erste Vorrichtung (201, 402) als Reaktion auf die erste Steueranweisung, einer Bewegung eines Cursors auf einer Anzeigeoberfläche der ersten Vorrichtung (201, 402), oder
Steuern, durch die erste Vorrichtung (201, 402) als Reaktion auf die erste Steueranweisung, eines Verschiebens einer Anzeigeoberfläche der ersten Vorrichtung (201, 402).

6. Verfahren nach Anspruch 5, wobei die erste Steueranweisung von der dritten Vorrichtung gemäß einer zweiten Steueranweisung erzeugt wird und wobei die zweite Steueranweisung von der dritten Vorrichtung basierend auf einer vierten Operation des Benutzers erzeugt wird.

7. Vorrichtungsübergreifendes Anwendungssteuerverfahren, umfassend:
Erhalten, in einer zweiten Vorrichtung (202, 401), von Anwendungsinformationen von mindestens einer ersten Anwendung, wobei die Anwendungsinformationen mindestens einen von einem Anwendungsnamen, einem Anwendungssymbol und einem Anwendungstyp umfassen;
Speichern, durch die zweite Vorrichtung (202, 401), der Anwendungsinformationen der ersten Anwendung in einer zweiten verteilten Datenbank, wobei die zweite verteilte Datenbank für eine Datensynchronisation mit einer ersten verteilten Datenbank fähig ist, wobei die zweite verteilte Datenbank in der zweiten Vorrichtung (202, 401) eingerichtet ist und die erste verteilte Datenbank in einer ersten Vorrichtung (201, 402) eingerichtet ist;
Empfangen, in der zweiten Vorrichtung (202, 401), einer ersten Operation von einem Benutzer, wobei die erste Operation die zweite Vorrichtung (202, 401) anweist, die Anwendungsinformationen der ersten Anwendung in der zweiten verteilten Datenbank zu speichern;
Empfangen, in der zweiten Vorrichtung (202, 401), einer zweiten Operation von dem Benutzer, wobei die zweite Operation die zweite Vorrichtung (202, 401) anweist, eine Liste von Anwendungen zu erzeugen, die nicht gemeinsam genutzt werden dürfen;
Erzeugen, durch die zweite Vorrichtung (202, 401), der Liste von Anwendungen, die nicht gemeinsam genutzt werden dürfen, wobei die Liste von Anwendungen, die nicht gemeinsam genutzt werden dürfen, von der ersten Vorrichtung (201, 402) verwendet wird, um die Anwendungsinformationen der ersten Anwendung zu filtern, um eine zweite Anwendung zu erhalten, wobei die zweite Anwendung zu einer Teilgruppe der ersten Anwendung in dem Sinne gehört, dass die mindestens eine erste Anwendung eine Vielzahl von Anwendungen umfasst und dass die zweite Anwendung eine oder mehrere oder alle Anwendungen aus der Vielzahl von Anwendungen der mindestens einen ersten Anwendung umfasst und wobei die zweite Anwendung zu einer Liste von Anwendungen in der zweiten Vorrichtung (202, 401) gehört, die gemeinsam genutzt werden dürfen; und
Senden, durch die zweite Vorrichtung (202, 401), der Liste von Anwendungen, die nicht gemeinsam genutzt werden dürfen.

8. Verfahren nach Anspruch 7, wobei das Verfahren ferner umfasst:
Empfangen, in der zweiten Vorrichtung (202, 401), von ersten Informationen von der ersten Vorrichtung (201, 402), wobei die ersten Informationen Anwendungsinformationen einer dritten Anwendung und eine Hardwarefähigkeit der ersten Vorrichtung (201, 402) umfassen und wobei die dritte Anwendung zu der zweiten Anwendung der zweiten Vorrichtung (202, 401) gehört;
Ermitteln, durch die zweite Vorrichtung (202, 401), von Projektionsdaten der dritten Anwendung, wobei die Projektionsdaten der dritten Anwendung eine Anzeigerichtlinie für die dritte Anwendung umfassen; und
Senden von zweiten Informationen von der zweiten Vorrichtung (202, 401) an die erste Vorrichtung (201, 402), wobei die zweiten Informationen die Projektionsdaten der dritten Anwendung umfassen und wobei die dritte Anwendung fähig ist, die Hardwarefähigkeit der ersten Vorrichtung (201, 402) aufzurufen.

9. Computerlesbares Speichermedium, das Computeranweisungen umfasst, wobei, wenn die Computeranweisungen in einer ersten elektronischen Vorrichtung (500) ausgeführt werden, die elektronische Vorrichtung (500) aktiviert wird, um das Verfahren nach einem der Ansprüche 1 bis 6 oder nach einem der Ansprüche 7 bis 8 durchzuführen.

10. Chip, der mindestens einen Prozessor (510) und eine Bedienoberflächenschaltung umfasst, wobei die Bedienoberflächenschaltung konfiguriert ist zum Bereitstellen von Programmanweisungen oder Daten für den mindestens einen Prozessor (510), und wobei der mindestens eine Prozessor (510) konfiguriert ist zum Ausführen der Anweisungen, um das Verfahren nach einem der Ansprüche 1 bis 6 oder nach einem der Ansprüche 7 bis 8 zu implementieren.

11. Erste elektronische Vorrichtung (500), wobei die erste elektronische Vorrichtung (500) einen Prozessor (510) und einen Speicher umfasst und konfiguriert ist, um das Verfahren nach einem der Ansprüche 1 bis 6 oder nach einem der Ansprüche 7 bis 8 durchzuführen.

## Revendications

1. Procédé de commande d'application inter-dispositifs, comprenant :
l'obtention, par un premier dispositif (201, 402), d'informations d'application d'au moins une première application d'un deuxième dispositif (202, 401) depuis une première base de données distribuée, la première base de données distribuée étant dans le premier dispositif (201, 402), la première base de données distribuée étant capable de synchroniser des données avec une deuxième base de données distribuée, la deuxième base de données distribuée étant dans le deuxième dispositif (202, 401), et les informations d'application comprenant au moins l'un parmi un nom d'application, une icône d'application, et un type d'application ;
l'affichage, par le premier dispositif (201, 402), d'une première interface, la première interface comprenant une deuxième application du deuxième dispositif (202, 401) et la deuxième application appartenant à un sous-ensemble de la première application dans le sens où l'au moins une première application comprend une pluralité d'applications et la deuxième application comprend une ou plusieurs ou toutes les applications de la pluralité d'applications de l'au moins une première application ;
la réception, par le premier dispositif (201, 402), d'une première opération par un utilisateur, la première opération indiquant au premier dispositif (201, 402) d'afficher la deuxième application du deuxième dispositif (202, 401) ;
l'obtention, par le premier dispositif (201, 402), d'une liste d'applications sur le deuxième dispositif (202, 401) qui sont interdites de partage, la liste d'applications sur le deuxième dispositif (202, 401) qui sont interdites de partage étant générée par le deuxième dispositif (202, 401) sur la base d'une deuxième opération de l'utilisateur ; et
le filtrage, par le premier dispositif (201, 402), des informations d'application de la première application sur la base de la liste d'applications sur le deuxième dispositif (202, 401) qui sont interdites de partage, pour obtenir la deuxième application, la deuxième application appartenant à une liste d'applications sur le deuxième dispositif (202, 401) qui sont autorisées à être partagées.

2. Procédé selon la revendication 1, dans lequel le procédé comprend en outre :
l'obtention, par le premier dispositif (201, 402), de premières informations en provenance du deuxième dispositif (202, 401), les premières informations comprenant des données de projection d'une troisième application, la troisième application appartenant à la deuxième application, et les données de projection de la troisième application comprenant une politique d'affichage pour la troisième application ; et
l'affichage, par le premier dispositif (201, 402), d'une deuxième interface sur la base des premières informations, la deuxième interface comprenant la troisième application, et la troisième application étant capable d'invoquer une capacité matérielle du premier dispositif (201, 402).

3. Procédé selon la revendication 2, dans lequel le procédé comprend en outre :
la réception, par le premier dispositif (201, 402), d'une troisième opération par l'utilisateur, la troisième opération indiquant au premier dispositif (201, 402) d'afficher la troisième application du deuxième dispositif (202, 401).

4. Procédé selon la revendication 2 ou la revendication 3, le procédé comprenant en outre l'étape suivante :
l'envoi, par le premier dispositif (201, 402), de deuxièmes informations au deuxième dispositif (202, 401), les deuxièmes informations comprenant des informations d'application de la troisième application et la capacité matérielle du premier dispositif (201, 402), et les deuxièmes informations étant utilisées par le deuxième dispositif (202, 401) pour générer les premières informations.

5. Procédé selon l'une quelconque des revendications 1 à 4, dans lequel le procédé comprend en outre :
la réception, par le premier dispositif (201, 402), d'une première instruction de commande en provenance d'un troisième dispositif, le troisième dispositif étant un dispositif de commande ; et
la commande, par le premier dispositif (201, 402) en réponse à la première instruction de commande, d'un déplacement d'un curseur sur une interface d'affichage du premier dispositif (201, 402), ou
la commande, par le premier dispositif (201, 402) en réponse à la première instruction de commande, d'un glissement d'une interface d'affichage du premier dispositif (201, 402).

6. Procédé selon la revendication 5, dans lequel la première instruction de commande est générée par le troisième dispositif selon une deuxième instruction de commande, et la deuxième instruction de commande est générée par le troisième dispositif sur la base d'une quatrième opération de l'utilisateur.

7. Procédé de commande d'application inter-dispositifs, comprenant :
l'obtention, par un deuxième dispositif (202, 401), d'informations d'application d'au moins une première application, les informations d'application comprenant au moins l'un parmi un nom d'application, une icône d'application et un type d'application ;
le stockage, par le deuxième dispositif (202, 401), des informations d'application de la première application dans une deuxième base de données distribuée, la deuxième base de données distribuée étant capable de synchroniser des données avec une première base de données distribuée, la deuxième base de données distribuée étant définie dans le deuxième dispositif (202, 401), et la première base de données distribuée étant définie dans un premier dispositif (201, 402);
la réception, par le deuxième dispositif (202, 401), d'une première opération par un utilisateur, la première opération indiquant au deuxième dispositif (202, 401) de stocker les informations d'application de la première application dans la deuxième base de données distribuée ;
la réception, par le deuxième dispositif (202, 401), d'une deuxième opération par l'utilisateur, la deuxième opération indiquant au deuxième dispositif (202, 401) de générer une liste d'applications qui sont interdites de partage ;
la génération, par le deuxième dispositif (202, 401), de la liste d'applications qui sont interdites de partage, la liste d'applications qui sont interdites de partage étant utilisée par le premier dispositif (201, 402) pour filtrer les informations d'application de la première application, pour obtenir une deuxième application, la deuxième application appartenant à un sous-ensemble de la première application, dans le sens où l'au moins une première application comprend une pluralité d'applications et la deuxième application comprend une ou plusieurs ou toutes les applications de la pluralité d'applications de l'au moins une première application et la deuxième application appartient à une liste d'applications sur le deuxième dispositif (202, 401) qui sont autorisées à être partagées ; et
l'envoi, par le deuxième dispositif (202, 401), de la liste des applications qui sont interdites de partage.

8. Procédé selon la revendication 7, dans lequel le procédé comprend en outre :
la réception, par le deuxième dispositif (202, 401), de premières informations en provenance du premier dispositif (201, 402), les premières informations comprenant des informations d'application d'une troisième application et une capacité matérielle du premier dispositif (201, 402), et la troisième application appartenant à la deuxième application du deuxième dispositif (202, 401) ;
la détermination, par le deuxième dispositif (202, 401), de données de projection de la troisième application, les données de projection de la troisième application comprenant une politique d'affichage pour la troisième application ; et
l'envoi, par le deuxième dispositif (202, 401), de deuxièmes informations au premier dispositif (201, 402), les deuxièmes informations comprenant les données de projection de la troisième application, et la troisième application étant capable d'invoquer la capacité matérielle du premier dispositif (201, 402).

9. Support de stockage lisible par ordinateur, comprenant des instructions informatiques, dans lequel lorsque les instructions informatiques sont exécutées sur un premier dispositif électronique (500), le premier dispositif électronique (500) est capable de réaliser le procédé selon l'une quelconque des revendications 1 à 6 ou l'une quelconque des revendications 7 à 8.

10. Puce, comprenant au moins un processeur (510) et un circuit d'interface, le circuit d'interface étant configuré pour fournir des instructions de programme ou des données pour l'au moins un processeur (510), et l'au moins un processeur (510) étant configuré pour exécuter les instructions, pour mettre en œuvre le procédé selon l'une quelconque des revendications 1 à 6 ou l'une quelconque des revendications 7 à 8.

11. Premier dispositif électronique (500), dans lequel le premier dispositif électronique (500) comprend un processeur (510) et une mémoire, et est configuré pour réaliser le procédé selon l'une quelconque des revendications 1 à 6 ou l'une quelconque des revendications 7 à 8.
